# EUROPÄISCHE PATENTSCHRIFT

(11) **EP 2 206 916 B1**
(45) Veröffentlichungstag und Bekanntmachung des Hinweises auf die Patenterteilung: **04.06.2014**
(21) Anmeldenummer: 09703651.1
(22) Anmeldetag: 13.01.2009
(51) Int. Cl.: F03D 9/00, F03D 1/04

(54) **VAKUUMKRAFTWERK**
AIR-VACUUM POWER PLANT
CENTRALE ÉLECTRIQUE À AIR ET À VIDE

(30) Priorität: 23.01.2008 RU 2008103911
(43) Veröffentlichungstag der Anmeldung: 14.07.2010
(73) Patentinhaber: Tseplyaev, Oleg Nikolaevich, St.Petersburg 191119 (RU); Shkryogalo, Aleksander Grigorievich, St.Petersburg 197349 (RU)
(72) Erfinder: Tseplyaev, Oleg Nikolaevich, St.Petersburg 191119 (RU); Shkryogalo, Aleksander Grigorievich, St.Petersburg 197349 (RU)
(74) Vertreter: Jeck, Anton
(86) Internationale Anmeldenummer: PCT/RU2009/000002
(87) Internationale Veröffentlichungsnummer: WO 2009/093932

(56) Entgegenhaltungen:
- WO-A1-96/31698
- DE-A1- 3 209 467
- RU-C1- 2 111 381
- RU-C1- 2 118 701
- RU-C1- 2 246 031
- US-A- 129 567
- US-A- 695 524
- US-A- 3 936 652
- US-A- 4 367 627
- US-A1- 2006 272 240

## Beschreibung

Die Erfindung betrifft ein Luft-Vakuum-Kraftwerk, das ein Absaugrohr, eine Luftturbine und einen Stromerzeuger aufweist, der kinematisch mit der Luftturbine verbunden ist.

Die Erfindung kann in der Energieindustrie insbesondere zur Stromerzeugung ohne Wind verwendet werden.

Aus dem Patent Nr. RU 2246031 ist ein Windkraftwerk bekannt. Dieses weist ein vertikales Absaugrohr und horizontale luftführende Kanäle in Form von radial ausgerichteten Diffusoren mit Ausgangsdüsen auf. Das Windrad ist im horizontalen Luftstrom zwischen den Düsen und dem Absaugrohr angeordnet. Diese bekannte Anlage kann aber ohne Wind nicht betrieben werden, außerdem ist ihr Aufbau ziemlich kompliziert.

Ebenfalls bekannt ist ein Luft-Vakuum-Kraftwerk zur Stromerzeugung (Patent RU 2111381). Dieses Kraftwerk weist ein Absaugrohr, das auf der Stütze montiert ist, eine im Absaugohr platzierte Luftturbine, einen Stromerzeuger und Heizelemente zum Erwärmen des Luftstroms im Rohr auf. Die Stütze des Rohrs ist als zweistöckiger Raum ausgeführt, wobei das Rohr dabei 500 m lang ist.

Das bekannte Kraftwerk kann auch ohne Wind betrieben werden. Seine Nachteile bestehen in der Kompliziertheit und einteiligen Konstruktion und folglich in dessen kompletter Unbeweglichkeit. Ein solches Kraftwerk ist ziemlich kompliziert zu montieren, wenn es wenig Platz zum Aufstellen der Anlage gibt. Auch bei komplizierten Landschaftsverhältnissen, z. B. in der Gebirgsgegend, mit Höhendifferenz und wenn das Kraftwerk schnell montiert werden soll, ist die Montage sehr schwierig.

Durch US 3,936,652 ist ein nach dem Prinzip eines Aufwindkraftwerks arbeitendes Luft-Vakuum-Kraftwerk bekannt. Dieses weist ein vertikales Absaugrohr, eine oder mehrere Luftturbinen und Stromerzeuger auf. Jede Luftturbine ist mit einem Stromerzeuger kinematisch verbunden. Ein oder mehrere zusätzliche Rohre verlaufen horizontal am Boden zum Unterteil des Absaugrohres. In jedem zusätzlichen Rohr ist eine Luftturbine außerhalb des Unterteils des Absaugrohrs angeordnet. Der Durchmesser jedes zusätzlichen Rohrs, in dem eine Luftturbine angeordnet ist, ist kleiner ist als der Durchmesser des Absaugrohrs. Eine oder mehrere Wärmequellen sind in dem Absaugrohr oder in dem einen oder den mehreren zusätzlichen Rohren angeordnet, um die Luft zu erwärmen, welche dadurch im Absaugrohr aufsteigt und die mindestens eine Luftturbine antreibt.

Durch DE 32 09 467 A1 ist ein Luft-Vakuum-Kraftwerk bekannt. Dieses weist ein vertikales Absaugrohr, mindestens eine Luftturbine und mindestens einen Stromerzeuger auf. Jede Luftturbine ist mit einem Stromerzeuger kinematisch verbunden. Mindestens ein zusätzliches Rohr verläuft horizontal am Boden zum Unterteil des Absaugrohres. In dem zusätzlichen Rohr ist eine Luftturbine außerhalb des Unterteils des Absaugrohrs angeordnet. Der Durchmesser des zusätzlichen Rohrs, in dem eine Luftturbine angeordnet ist, ist kleiner ist als der Durchmesser des Absaugrohrs. In dem Absaugrohr befindet sich eine Gasflamme, wie sie beim Abfackeln beispielsweise auf Ölfeldern benötigt wird, um die Luft zu erwärmen, welche dadurch im Absaugrohr aufsteigt und die mindestens eine Luftturbine antreibt.

Durch WO 96/31698 A1 ist ein Aufwindkraftwerk mit einem vertikal auf dem Boden aufstehenden zentralen Absaugrohr und einem dieses umgebenden Solarkollektor bekannt. Der Solarkollektor ist um das zentrale Absaugrohr herum in Sektoren unterteilt. Jedem Sektor des Solarkollektors ist ein im Absaugrohr untergebrachter Strömungskanal konstanten Querschnitts zugeordnet. Jeder Sektor des Solarkollektors steigt zum zentralen Absaugrohr hin auf. Um das zentrale Absaugrohr herum ist der Boden derart ausgebildet, dass er zusammen mit jedem Sektor des Solarkollektors eine Düse bildet, die in den dem jeweiligen Sektor zugeordneten Strömungskanal mündet. Der jüngste Querschnitt der Düse entspricht dabei dem Durchmesser des Strömungskanals. Im jüngsten Querschnitt jeder Düse ist eine Luftturbine außerhalb des Unterteils des Absaugrohrs angeordnet, welche mit einem Stromerzeuger kinematisch verbunden ist.

Durch US 2006/272240 A1 ist ein zentrales Absaugrohr für ein Aufwindkraftwerk bekannt. Dieses besteht aus einer schweren Basis, einem leichten Kamin und einem Verbindungsbalg. Der leichte Kamin besteht aus Segmenten, die mit einem Gas befüllt sind, das leichter als Luft ist, so dass der leichte Kamin einen Auftrieb erfährt und dieser in der Umgebungsluft schwimmt. Bei auftretenden Winden neigt sich der leichte Kamin entsprechend der Windrichtung gegenüber der Basis.

Es ist Aufgabe der Erfindung, die Konstruktion und die Erweiterung der Betriebsmöglichkeiten zu vereinfachen.

Die gestellte Aufgabe wird durch die Merkmale des Anspruchs 1 gelöst.

Das technische Ergebnis ist dadurch erreicht, dass das Luft-Vakuum-Kraftwerk ein Absaugrohr aufweist. In dem Unterteil des Absaugrohrs ist außerhalb eine Luftturbine angeordnet, die in einem zusätzlichen Rohr angeordnet ist. Das Kraftwerk enthält auch einen Stromerzeuger, der kinematisch mit einer Luftturbine verbunden ist. Das Absaugrohr und das zusätzliche Rohr, in dem die Luftturbine angeordnet ist, sind über eine Verbindung miteinander verbunden. Diese Verbindung ist beweglich und mit einem veränderlichen Winkel zwischen diesen zwei Rohren ausgeführt. Außerdem ist der Durchmesser des zusätzlichen Rohrs, in dem die Luftturbine angeordnet ist, kleiner als der Durchmesser des Absaugrohrs. Die angemeldete Konstruktion ist zerlegbar ausgeführt. Dabei sind das Absaugrohr und das zusätzliche Rohr, in dem die Luftturbine angeordnet ist, über eine trennbare Verbindung miteinander verbindbar.

Das Unterteil des Absaugrohrs und das zusätzliche Rohr, in dem die Luftturbine angeordnet ist, liegen unter dem Bodenniveau (unter der Erde). Die Neuheit der angemeldeten technischen Lösung besteht darin:
- die Luftturbine, die im zusätzlich eingeführten Rohr montiert ist, ist außerhalb im Unterteil des Absaugrohrs angeordnet,
- der Durchmesser des zusätzlichen Rohrs, in dem die Luftturbine angeordnet ist, ist kleiner als der Durchmesser des Absaugrohrs,
- die Verbindung des Absaugrohrs und des zusätzlichen Rohrs ist beweglich und mit einem veränderlichen Winkel zwischen ihnen ausgeführt,
- die Konstruktion des Luft-Vakuum-Kraftwerks ist zerlegbar ausgeführt, dabei ist die Verbindung des zusätzlichen Rohrs und des Absaugrohrs trennbar ausgeführt,
- der Unterteil des Absaugrohrs und das zusätzliche Rohr, in dem die Luftturbine angeordnet ist, liegen unter dem Bodenniveau.

Der Stand der Technik zeigt keine technische Lösung, die diese Merkmale aufweisen, die den charakteristischen Merkmalen der Erfindung entsprechen. Daraus ist die Schlussfolgerung zu ziehen, dass die vorgeschlagene Lösung eine erfinderische Höhe aufweist.

Die vorgeschlagene technische Lösung, die über die angemeldete Anzahl der Merkmale verfügt, stellt eine einfache mobile Konstruktion dar und sichert ziemlich breite Betriebsmöglichkeiten zu.

Die Erfindung wird anhand eines in den Zeichnungen dargestellten Ausführungsbeispiels näher erläutert. Es zeigen:
- Fig. 1: die vorgeschlagene Konstruktion des Luft-Vakuum-Kraftwerks und
- Fig. 2: eine Ausführungsvariante des vorgeschlagenen Luft-Vakuum-Kraftwerks

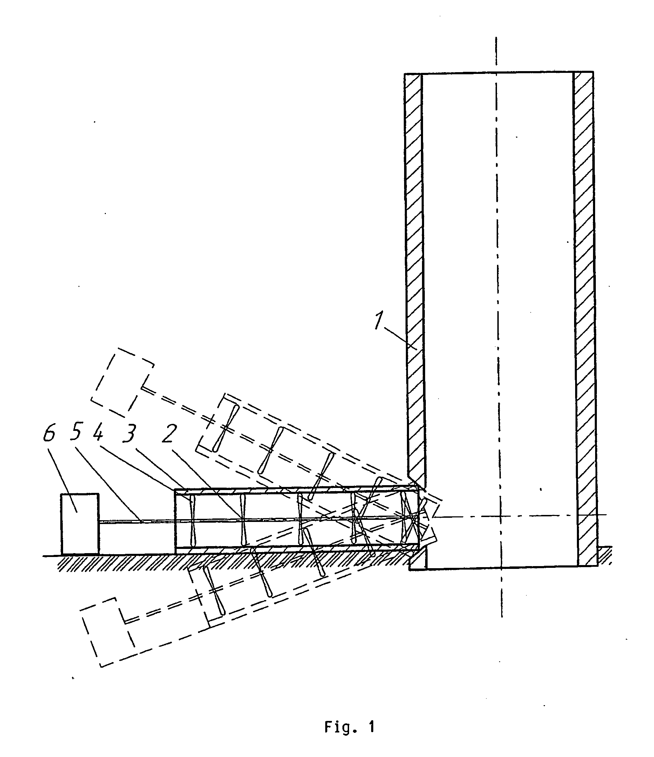

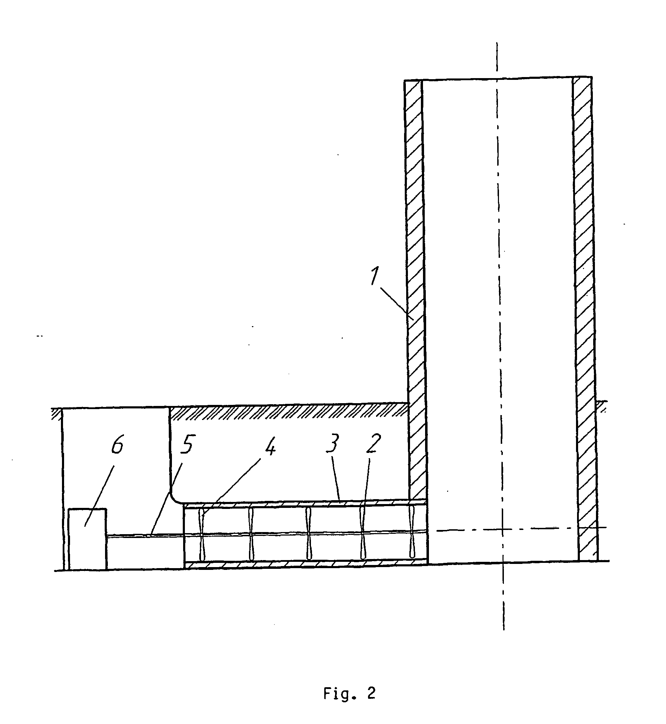

Das Luft-Vakuum-Kraftwerk (Fig. 1) weist ein Absaugrohr 1, eine Luftturbine 2, die in einem zusätzlichen Rohr 3 angeordnet ist, Schaufeln 4 der Luftturbine 2, die auf einer Welle 5 befestigt sind und einen Stromerzeuger 6, der auf der Welle 5 der Luftturbine 2 angeordnet ist, auf. Die Luftturbine 2 ist außerhalb des Absaugrohrs 1 in dessen Unterteil angeordnet und wirkt mit dessen innerem Hohlraum aerodynamisch zusammen. Das zusätzliche Rohr 3 und das Absaugrohr 1 sind über eine bewegliche Verbindung miteinander verbunden, die einen veränderlichen Winkel zwischen ihnen bildet. Der Winkel zwischen dem Absaugrohr und dem zusätzlichen Rohr kann sich ändern. Dabei soll die Höhenlage der Ausgangsöffnung des Absaugrohrs jedoch größer sein als die Höhenlage der Eingangsöffnung des zusätzlichen Rohrs. Das zusätzliche Rohr 3, in dem die Luftturbine 2 angeordnet ist, hat einen kleineren Durchmesser als der Durchmesser des Absaugrohrs 1. Die vorgeschlagene Konstruktion des Kraftwerks ist zerlegbar ausgeführt. Dabei ist das zusätzliche Rohr 3 mit dem Absaugrohr 1 über eine trennbare Verbindung miteinander verbunden. Das Unterteil des Absaugrohrs 1 (Fig. 2) und das zusätzliche Rohr 3 liegen mit der Luftturbine unter dem Bodenniveau (unter der Erde).

Das Kraftwerk funktioniert folgenderweise. Durch die Differenz des Atmosphärendrucks und der Temperatur an der Ausgangsöffnung des Absaugrohrs 1 und an der Eingangsöffnung des Rohrs 3 erfolgt eine Bewegung der Atmosphärenluft, die in die Luftturbine 2 gelangt. Der entstehende Luftstrom beginnt, die Schaufeln 4 der Luftturbine 2 zu drehen. Die Geschwindigkeit des Luftstroms in der Luftturbine 2 steigt und stabilisiert sich. Es wird eine permanente Schnellbewegung des Luftstroms im Rohr 3 durch die Luftturbine 2 in dem Absaugrohr 1 erzeugt. Da der Stromerzeuger 6 auf der Welle 5 der Luftturbine 2 angeordnet ist, beginnt er zu arbeiten und Strom zu erzeugen. Das zusätzliche Rohr 3 liegt unter dem Bodenniveau (Fig. 2).

Falls erforderlich kann als Absaugrohr ein Kamin von einem beliebigen Kesselhaus verwendet werden.

Die Konstruktion des vorgeschlagenen Kraftwerks ist ziemlich einfach. Die Anordnung der Luftturbine, die im zusätzlichen Rohr angeordnet ist, außerhalb des Absaugrohrs und der veränderliche Winkel zwischen ihnen erlauben, das Absaugrohr und die Luftturbine in verschiedenen Winkeln zu positionieren, z. B. am Abhang, je nach der Form des für die Montage vorgesehenen Bodens. Dies erweitert die Betriebsmöglichkeiten der Konstruktion. Die Einfachheit, die Leichtigkeit sowie die Zerlegbarkeit der Konstruktion gewährleistet eine Mobilität, wobei die Betriebsmöglichkeiten erweitert werden. Ein solches Kraftwerk kann z. B. zur Stromerzeugung in schwer zugänglichen Gebieten eingesetzt werden, an die keine Stromleitungen herangeführt sind.

Das vorgeschlagene Luft-Vakuum-Kraftwerk ist industriell mit bekannten Mitteln und Verfahren herstellbar. Daraus kann die Schlussfolgerung gezogen werden, dass die vorgeschlagene technische Lösung eine gewerbliche Anwendbarkeit aufweist.

## Patentansprüche

1. Luft-Vakuum-Kraftwerk, das ein Absaugrohr (1), eine Luftturbine (2) und einen Stromerzeuger (6) aufweist, der kinematisch mit der Luftturbine (2) verbunden ist, wobei die Luftturbine (2), die in einem zusätzlichen Rohr (3) angeordnet ist, außerhalb im Unterteil des Absaugrohrs (1) angeordnet ist, und der Durchmesser des zusätzlichen Rohrs (3), in dem die Luftturbine (2) angeordnet ist, kleiner ist als der Durchmesser des Absaugrohrs (1),
**dadurch gekennzeichnet,**
**dass** das Absaugrohr (1) und das zusätzliche Rohr (3) über eine bewegliche Verbindung mit einem veränderlichen Winkel zwischen beiden miteinander verbunden sind.

2. Luft-Vakuum-Kraftwerk nach Anspruch 1,
**dadurch gekennzeichnet,**
**dass** es eine zerlegbare Konstruktion bildet, wobei die Verbindung des zusätzlichen Rohrs (3) und des Absaugrohrs (1) trennbar ist.

3. Luft-Vakuum-Kraftwerk nach Anspruch 1,
**dadurch gekennzeichnet,**
**dass** das Unterteil des Absaugrohrs (1) und das zusätzliche Rohr (3), in dem die Luftturbine (2) angeordnet ist, unter dem Bodenniveau liegen.

4. Luft-Vakuum-Kraftwerk nach Anspruch 1, 2 oder 3,
**dadurch gekennzeichnet,**
**dass** die Höhenlage der Ausgangsöffnung des Absaugrohrs (1) größer ist als die Höhenlage der Eingangsöffnung des zusätzlichen Rohrs (3).

5. Luft-Vakuum-Kraftwerk nach einem der vorhergehenden Ansprüche,
**dadurch gekennzeichnet,**
**dass** als Absaugrohr (1) ein Kamin eines Kesselhauses vorgesehen ist.

## Claims

1. An air-vacuum power plant, which has a suction pipe (1), an air turbine (2) and an electrical-current generator (6) that is connected kinematically to the air turbine (2), and in which the air turbine (2), disposed in an additional pipe (3), is disposed outside in the lower part of the suction pipe (1), and the diameter of the additional pipe (3) in which the air turbine (2) is disposed is smaller than the diameter of the suction pipe (1),
**characterized in that**
the suction pipe (1) and the additional pipe (3) communicate with one another at a variable angle between them via a movable connection.

2. The air-vacuum power plant of claim 1,
**characterized in that**
it forms a construction that is capable of being dismantled, in which the connection of the additional pipe (3) and the suction pipe (1) is disconnectable.

3. The air-vacuum power plant of claim 1,
**characterized in that**
the lower part of the suction pipe (1) and the additional pipe (3) in which the air turbine (2) is disposed are located below floor level.

4. The air-vacuum power plant of claim 1, 2 or 3
**characterized in that**
the heightwise location of the outlet opening of the suction pipe (1) is greater than the heightwise location of the inlet opening of the additional pipe (3).

5. The air-vacuum power plant of one of the foregoing claims,
**characterized in that**
a chimney of a boiler house is provided as the suction pipe (1).

## Revendications

1. Centrale électrique à air et à vide, laquelle comprend un conduit d'aspiration (1), une turbine à air (2) et un générateur de courant (6) qui est raccordé de manière cinématique à la turbine à air (2), la turbine à air (2), qui est disposée dans un conduit supplémentaire (3), étant disposée à l'extérieur dans la partie inférieure du conduit d'aspiration (1), et le diamètre du conduit supplémentaire (3), dans lequel est disposée la turbine à air (2), étant inférieur au diamètre du conduit d'aspiration (1),
**caractérisée en ce que**
le conduit d'aspiration (1) et le conduit supplémentaire (3) sont raccordés l'un à l'autre par le biais d'un raccord mobile, de telle sorte que l'angle entre ceux-ci soit modifiable.

2. Centrale électrique à air et à vide selon la revendication 1,
**caractérisée en ce**
**qu'**elle forme une structure démontable, le raccord du conduit supplémentaire (3) et du conduit d'aspiration (1) pouvant être détaché.

3. Centrale électrique à air et à vide selon la revendication 1,
**caractérisée en ce que**
la partie inférieure du conduit d'aspiration (1) et le conduit supplémentaire (3), dans lequel est disposée la turbine à air (2), se situent en dessous du niveau du sol.

4. Centrale électrique à air et à vide selon la revendication 1, 2 ou 3,
**caractérisée en ce que**
la hauteur de l'ouverture de sortie du conduit d'aspiration (1) est supérieure à la hauteur de l'ouverture d'entrée du conduit supplémentaire (3).

5. Centrale électrique à air et à vide selon l'une quelconque des revendications précédentes,
**caractérisée en ce**
**qu'**il est prévu, en tant que conduit d'aspiration (1), une cheminée d'une chaufferie.
